# EUROPÄISCHE PATENTSCHRIFT

(11) **EP 3 045 740 B1**
(45) Veröffentlichungstag und Bekanntmachung des Hinweises auf die Patenterteilung: **21.04.2021**
(21) Anmeldenummer: 15000125.3
(22) Anmeldetag: 19.01.2015
(51) Int. Cl.: F16B 25/00, F16B 25/10

(54) **Befestigungselement zur Befestigung eines Bauteils an einem Wärmedämmverbundsystem**
Fastening device for fastening a component to a thermal insulation composite system
Élément de fixation destiné à fixer un composant sur un système composite d'isolation thermique

(43) Veröffentlichungstag der Anmeldung: 20.07.2016
(73) Patentinhaber: BTS BauTechnischeSysteme GmbH & Co. KG, 45731 Waltrop (DE)
(72) Erfinder: Günter, Sawatzki, 48249 Dülmen (DE)
(74) Vertreter: Meinke, Jochen

(56) Entgegenhaltungen:
- EP-A1- 2 172 660
- EP-A2- 2 757 273
- WO-A1-2009/076544
- DE-A1- 19 606 162
- DE-T2- 69 200 308
- GB-A- 1 150 769
- US-A1- 2011 280 684

## Beschreibung

Die Erfindung betrifft ein Befestigungselement zur Befestigung eines Bauteils, insbesondere aus Blech, an einer einem Mauerwerk vorgelagerten Dämmstoffplatte, die eine äußere Putzschicht aufweist, mit einem Kopf, einem Schaft und einem kopfseitig auf dem Schaft angeordneten Dichtring zur Abdichtung eines das Befestigungselement aufnehmenden Loches in dem Bauteil, wobei der Kopf eine Angriffskontur zur Aufnahme eines Drehmoment ausübenden Mittels und der Schaft ein selbstschneidendes Gewinde aufweist, das sich schneckenförmig entlang zumindest eines Teils des Schaftumfangs zum Kopf erstreckt.

Befestigungselemente dieser Art sind bekannt. Es handelt sich dabei um Schrauben, die der Fachmann als Dichtschrauben oder Spenglerschrauben kennt. Sie werden allgemein dazu verwendet, platten- oder profilartige Bauteile, insbesondere aus dünnem Blech, wie beispielsweise Trapezbleche, Blechdachziegel, Firstbleche, Rinnensysteme für Regenwasser, Traufbleche, Ortgangbleche oder Wandanschlussbleche an einem thermisch isolierenden Untergrund zu befestigen, der vor einem Mauerwerk, beispielsweise einer Wand oder einer Decke liegt. Aber auch andere Bauteile wie Hausnummernschilder, Briefkästen, Wandleuchten oder auch Markisen müssen häufig an isolierten Außenfassaden befestigt werden. Bei einem derartigen Untergrund handelt es sich beispielsweise um Wärmedämmverbundsysteme, die aus am Mauerwerk befestigten Hartschaumplatten wie z.B. Styropor- oder Styrodur-Platten bestehen, welche außenseitig mit einem gelochten oder gemaschten Armierungsgewebe versehen sind, auf das ein grober Putz aufgebracht ist. Dieser ist mit einem mineralischen Feinputz versehen, der wiederrum mit einem geeigneten Anstrich versehen ist.

Um Wärmebrücken zu vermeiden, ist es sinnvoll, Befestigungselemente zu verwenden, die sich nicht durch die Dämmung bis in das Mauerwerk erstrecken. Dies setzt zum einen voraus, dass die Befestigungselemente eine Länge aufweisen, die kleiner als die Dicke der Dämmstoffplatte ist. Zum anderen wirft dies das Problem auf, dass die Befestigung des Bauteils allein im Dämmstoff und in der Putzschicht, also im Wärmedämmverbundsystem erfolgen muss, und noch dazu auf einer vergleichsweise kurzen axialen Länge. Die Haltekraft im Dämmstoff ist entscheidend vom Außendurchmesser des Befestigungselements abhängig. Je größer, desto höher ist die Anzugskraft.

Es werden daher in der Regel Befestigungselemente in der Gestalt von Kunststoffdübeln verwendet, die ein relativ grobes, schneckenförmiges Außengewinde mit einer großen Steigung und relativ großer Oberfläche besitzen. Dies gewährleitet bereits einen guten Halt in der Dammstoffplatte. In einen Aufnahmehohlraum des Dübelkörpers wird eine sich durch ein Loch in dem zu befestigenden Bauteil erstreckende Dichtschraube eingedreht, die den Dübelkörper innerhalb der Dämmstoffplatte aufspreizt. Auf diese Weise wird das Bauteil an der Dämmstoffplatte festgehalten. Ein solcher Dübel ist beispielsweise in der deutschen Gebrauchsmusterschrift DE 298 12 947 U1 beschrieben. Ein Kunststoffdübel hat jedoch stets den Nachteil, dass er vor der Befestigung des Bauteils in das Wärmedämmverbundsystem eingesetzt werden muss. Hierfür muss zunächst das Bauteil angehalten, die Position für den Dübel markiert und das Bauteil wieder entfernt werden. Anschließend muss der Dübel gesetzt werden, wobei dies im Falle eines selbstbohrenden Dübels ohne zusätzliche Bohrung erfolgen kann, anderenfalls muss noch ein Loch in den Putz gebohrt werden. Ferner ist eine separate Schraube erforderlich, um das Bauteil festzuschrauben, und es wird ein vorgebohrtes Loch in dem Bauteil für die Schraube benötigt. Die Verwendung einzelner Kunststoffdübel zur Befestigung von Bauteilen auf Wärmedämmverbundsysteme ist deshalb umständlich und zeitaufwändig.

Ein gattungsgemäßes Befestigungselement ist ferner in der europäischen Patentanmeldung EP 2 757 273 A2 offenbart. Sie beschreibt ein einstückig vorgefertigtes Befestigungselement zum Befestigen einer mit einem Loch versehenen Platte an einem weichen Untergrund mit einer Deckverputzschicht, wobei das Befestigungselement einen Dübelkörper mit einem ersten Außengewinde zum Eindrehen in den weichen Untergrund, einen Kopf und eine Vorschubspitze mit einer ersten Härte größer als eine zweite Härte der Deckverputzschicht an einem dem ersten Ende gegenüberliegenden zweiten Ende des Dübelkörpers, wobei die Vorschubspitze zum Eindrehen in die Deckverputzschicht ausgebildet ist, der Dübelkörper eine dritte Härte hat, die geringer als die erste Härte ist und die Vorschubspitze mit einem zweiten Außengewinde versehen ist, das speziell auf das Anritzen und Durchdringen der Deckverputzschicht angepasst ist. Das Befestigungselement besteht aus zwei getrennt voneinander hergestellten Teilen, nämlich aus einer Schraube und einem Dübel, die zur bestimmungsgemäßen Verwendung werkseitig zu einem einstückig vorgefertigten Befestigungselement zusammengefügt werden. Der Kopf und die Vorschubspitze sind dabei Teile der Schraube, die an den beiden Enden des Dübels aus diesem hervorstehen. Um dieses Problem zu lösen, beschreibt die EP 2 757 273 A2 eine Handlochstanze zum Herstellen der benötigten Löcher, soweit diese nicht schon vorhanden sind.

Nachteilig ist bei diesem Befestigungselement der werkseitig zu erfolgende Fügeschritt, der die Herstellung aufwändig und teuer macht. Des Weiteren ist von Nachteil, dass das Befestigungselement stets ein ausreichend großes Loch in dem zu befestigenden Blechteil benötigt, weil der Dübelkörper aus Kunststoff besteht. Dieser kann sich zwar in den weichen Untergrund schneiden, nicht jedoch in das zu befestigende Bauteil. Die Vorschubspitze ist eine herkömmliche Schraubenspitze, die die Putzschicht nur bei ausreichender Druckkraft und häufiger Drehung aufbricht. In das Bauteil kann sie ebenfalls nicht bohren. Damit bestimmt der Außendurchmesser des Gewindes den Lochdurchmesser.

Ein ähnliches Befestigungselement ist aus der europäischen Patentanmeldung EP 1 645 758 A2 bekannt. Es besteht ebenfalls aus einem Dübelkörper mit einem schneckenförmigen Außengewinde aus Kunststoff und mit einem axialen Hohlraum und einer Spreizschraube, die in den Hohlraum aufzunehmen ist. Die Spreizschraube besitzt in ihrem bestimmungsgemäß in dem Dübelkörper zum Liegen kommenden Bereich ein schneckenförmiges Gewinde großer Steigung, an ihrer Spitze, die aus dem Dübelkörper vorsteht, jedoch ein metrisches Gewinde geringer Steigung. Über dieses wird sie mit einem abnehmbar anschraubbaren Bohrkopf aus Metall verbunden, welcher ein Loch in den Untergrund bohren kann, welcher eine Gipsplatte oder sogar eine Mauer sein kann. Nachteilig ist auch hier wieder der getrennte Herstellungsschritt von Schraube und Dübel, wozu die zusätzliche Herstellung des Bohrkopfes tritt. Anschließend muss die Montage von Dübel, Schraube und Bohrkopf erfolgen. Aufgrund der Dreiteiligkeit ist dies ebenfalls mit einem hohen Aufwand verbunden. Eine anwenderseitige Montage der drei Teile zur Herrichtung des verwendbaren Befestigungselements ist umständlich und unpraktisch. Ein weiterer Nachteil des Befestigungselements der EP 1 645 758 A2 besteht darin, dass das Außengewinde des Dübelkörpers aufgrund zu geringen Verhältnisses von Außendurchmesser zum Kerndurchmesser des Schaftes nicht geeignet ist, in Dämmstoffplatten Halt zu finden.

Die Patentanmeldung US 2011/280684 A1 offenbart ein Befestigungselement, das ähnlich zu dem gattungsgemäßen Befestigungselement ist, welches der Erfindung zugrunde liegt. Allerdings besitzt dieses Befestigungselement ein Gewinde mit einem Außendurchmesser, der im Vergleich zum Schaftdurchmesser zu gering ist, um die Eignung zu erfüllen, ein Bauteil an einer Dämmstoffplatte zu befestigen. Des Weiteren fehlt diesem Befestigungselement kopfseitig ein Dichtring und das Gewinde ist nicht selbstschneidend.

Die europäische Patentanmeldung EP 2172660 A1 offenbart ein Befestigungselement aus Kunststoff.

Ein weiteres Befestigungselement, das ähnlich zu dem gattungsgemäßen Befestigungselement ist, offenbart das Dokument DE 69200308 T2. Dieses Befestigungselement besitzt jedoch ebenfalls keinen Dichtring am Kopf. Zudem beschreibt dieses Dokument das Material nicht, aus dem das Befestigungselement hergestellt ist.
Es ist daher Aufgabe der vorliegenden Erfindung, ein Befestigungselement bereitzustellen, das anwenderseitig unmittelbar, d.h. ohne Herrichtungsaufwand verwendet werden kann, in Dämmstoffplatten einen guten Halt findet und für viele Anwendungszwecke verwendet werden kann, wobei es dabei nicht darauf ankommt, ob in dem zu befestigenden Bauteil Löcher vorgesehen sind und welchen Durchmesser sie haben.

Diese Aufgabe wird durch ein Befestigungselement gemäß Anspruch 1 gelöst. Vorteilhafte Weiterbildungen des Befestigungselements sind in den Unteransprüchen angegeben werden nachfolgend näher erläutert.

Erfindungsgemäß wird vorgeschlagen, das gattungsgemäße Befestigungselement derart auszubilden, dass das Verhältnis von Außendurchmesser des Gewindes zum Kerndurchmesser des Schafts mindestens 1,8 beträgt, dass das dem Kopf gegenüberliegende Ende des Schafts einen zwei oder mehrschneidigen Bohrerkopf trägt, der gegenüber dem Schaft radial vorsteht, und dass der Kopf, Schaft, dessen Gewinde und der Bohrerkopf einstückig aus Metall hergestellt sind. Die Kombination dieser Merkmale führt gerade zu einem Befestigungselement, das anwenderseitig einfach handhabbar ist, unmittelbar angewendet werden kann und für eine Vielzahl verschieden gelochter oder ungelochter Bauteile verwendet werden kann. Mit Hilfe des Bohrerkopfes kann ein Loch in dem Bauteil gegebenenfalls gesetzt oder ein bestehendes gegebenenfalls aufgebohrt werden, ohne dass ein weiteres Bohrwerkzeug benötigt wird. Aufgrund der Einstückigkeit von Kopf, Schaft und dessen Gewinde wird kein zusätzlicher Dübel benötigt, der vorher in die Dämmstoffplatte gesetzt werden müsste.

Im Ergebnis ist das Befestigungselement eine Schraube, insbesondere eine selbstbohrende Schraube mit einem Dichtkopf und einem selbstschneidenden, steilen Gewinde derart großer Oberfläche, um in einer Dammstoffplatte Halt zu finden.

Das relativ große Verhältnis von Außendurchmesser des Gewindes zum Kerndurchmesser des Schafts gewährleistet einen guten Halt des Befestigungselements in der Dämmstoffplatte. Denn durch dieses Verhältnis wird eine relativ große Profiltiefe des Gewindes erreicht, so dass sich das Befestigungselement tief in die Dämmstoffplatte einschneidet. Ferner besitzt das Gewinde eine relativ große Oberfläche, die ebenfalls für einen guten Halt zuträglich ist. Je größer das Verhältnis ist, desto stärker ist der Halt des Befestigungselements in der Dämmstoffplatte, denn umso tiefer schneidet sich das Gewinde in die Dämmstoffplatte hinein.

Bei der Dämmstoffplatte kann es sich um eine Hartschaumplatte, beispielsweise aus Styropor oder Styrodur handeln, die insbesondere Teil eines einleitend genannten Wärmedämmverbundsystems ist. Ein derartiger Untergrund ist relativ weich, leicht einschneidbar, und bringt dem Befestigungselement folgemäßig einen geringen Widerstand entgegen. Dies ist bei dem zu befestigenden Bauteil anders.

Bei dem Bauteil kann es um ein platten- oder profilartiges Bauteil aus Metall oder Kunststoff handeln. In der Regel wird es ein Bauteil aus dünnem Blech sein, beispielsweise aus Aluminium, Titanzink, Kupfer oder Edelstahl sein. Die verschiedenen einleitend genannten Bleche und anderen Bauteile sind hier bevorzugte zu befestigende Bauteile. Sie werden entweder ungelocht vertrieben oder mit einer Lochung von 6 mm, 8 mm oder 10 mm Löchern hergestellt, sodass bauseitig keine Löcher erst gestanzt oder gebohrt werden müssen, um das Befestigungselement zu platzieren. Das erfindungsgemäße Befestigungselement ist hierfür sämtliche Fälle gleichermaßen einsetzbar.

Sofern kein Loch in dem zu befestigenden Bauteil vorhanden ist, bohrt der Bohrkopf ein solches Loch selbst in das Bauteil sowie auch in die auf der Dämmstoffplatte vorhandene Putzschicht, wenn das Befestigungselement auf dem Bauteil angesetzt und unter Vorschub gedreht wird. Das Befestigen des Bauteils kann somit in einem einzigen Arbeitsgang und mit einem einzigen Werkzeug, das zur Ausübung eines Drehmoments auf das Befestigungselement dient, erfolgen. Weitere Werkzeuge, insbesondere eine Bohrmaschine oder Lochstanze, wenn hierfür nicht benötigt.

Ist ein Loch vorhanden, jedoch für den Schaft zu klein, sodass das Eindrehen des Befestigungselements in das Loch bereits anfänglich zu einem Presssitz führen würde, bohrt der Bohrkopf des erfindungsgemäßen Befestigungselements dieses Loch zumindest soweit auf, dass der Schaft mit Spiel in dem aufgeweiteten Loch einliegt. Das Aufweiten erfolgt jedoch nicht mehr als nötig, insbesondere nicht auf den Außenumfang des Gewindes, um die Dichtwirkung der Schraube zu gewährleisten. Diese erfolgt dadurch, dass im angezogenen Zustand des Befestigungselements der Dichtring vom Kopf gegen das Bauteil gepresst wird. Damit das Befestigungselement mitsamt Gewinde dennoch durch das aufgeweitete Loch hindurch passt, ist das Gewinde erfindungsgemäß selbstschneidend ausgeführt, sodass es in das Bauteil beim Eindrehen des Befestigungselements einschneidet. Dies setzt natürlich voraus, dass das Metall, aus dem das Befestigungselement besteht, härter ist, als das zu befestigende Bauteil. In jedem Fall ist dies bereits gewährleistet, wenn das Bauteil aus einem Kunststoff besteht.

Erfindungsgemäß ist das Befestigungselement aus einer Legierung aus Zink, Aluminium und Kupfer hergestellt. Dies hat den Vorteil, dass es härter als Aluminium und Kupfer ist, so dass der überwiegende Teil zu befestigender Bauteile des Dachzubehörs bedient werden kann.

Die Herstellung des erfindungsgemäßen Befestigungselements ist aufgrund seiner Materialeinstückigkeit und aufgrund des großen Gewindeaußendurchmesser-Kerndurchmesser-Verhältnisses nicht einfach. Es hat sich jedoch im Rahmen von Versuchen herausgestellt, dass die Herstellung des Befestigungselements mit guten Ergebnissen in einem Druckgussprozess erreicht werden kann. Das erfindungsgemäße Befestigungselement kann daher vorteilhafterweise in einem Druckgussprozess hergestellt sein.

Aufgrund des selbstschneidenden Gewindes und des verwendeten Materials für das Befestigungselement ist gewährleistet, dass das Befestigungselement auch dann durch das Loch in dem zu befestigenden Bauteil eingesetzt werden kann, wenn der Lochdurchmesser kleiner als der Außendurchmesser des Gewindes ist.
Das Befestigen des Bauteils kann somit auch in diesem Fall in einem einzigen Arbeitsgang ohne Bohr- oder Stanzwerkzeug erfolgen.

Sofern jedoch das Material, aus dem das Bauteil besteht, härter als das Befestigungselement ist, beispielsweise aus Edelstahl besteht, kann das Gewinde das Bauteil nicht einschneiden. In diesem Fall muss das Loch ausreichend groß sein, was nachfolgend noch verdeutlicht wird.

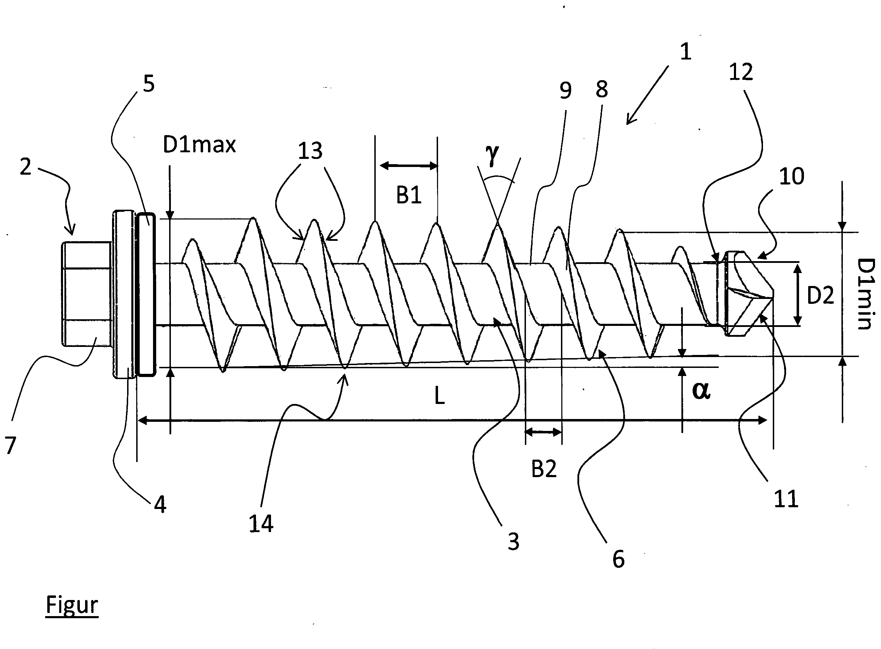

Ein erfindungsgemäßes Befestigungselement 1 ist in der beigefügten Figur dargestellt. Es weist einen Kopf 2, einen Schaft 3, ein Gewinde 6 und einen Bohrerkopf 10 auf. Der Kopf 2 ist an einem Ende des Schafts 3 einstückig mit diesem verbunden, das andere Ende des Schafts 3 trägt den Bohrerkopf 10, der ebenfalls materialeinstückig mit diesem ist. Das Gewinde 6 erstreckt sich schneckenförmig entlang des Schaftumfangs über zumindest einen Teil der axialen Länge des Schafts 3 vom Bohrerkopf 10 zum Kopf 2. Es ist so ausgebildet, dass das Befestigungselement 1 in der nicht dargestellten Dämmstoffplatte gut Halt findet.

Kopfseitig ist auf dem Schaft 3 ein elastischer Dichtring 5 angeordnet, der zur umfänglichen Abdichtung des das Befestigungselement 1 aufnehmenden Loches in dem zu befestigenden Bauteil dient. Er liegt am Kopf 2 auf der zum Schaft gerichteten Stirnseite an, so dass der Kopf 2 beim Anziehen des Befestigungselements 1 den Dichtring 5 gegen das Bauteil presst. Vorzugsweise kann der Kopf 2 wie in der Figur gezeigt, einen an seinem schaftseitigen Axialende radial vorstehenden Kragen 4 aufweisen. Durch diesen Kragen 4 ist der Durchmesser des Kopfes 2 erweitert. Der Kopf 2 samt Kragen 4 wirkt somit wie eine Unterlegscheibe. Der Dichtring 5 liegt dabei nicht nur am Kopf, sondern auch an diesem Kragen 4 an. Diese Anlagefläche muss aber nicht wie in der Figur gezeigt eben ausgebildet sein. So kann der Kragen 4 beispielsweise in der Art einer Kappe ausgestaltet sein, die den Dichtring 5 umfänglich und in axialer Richtung zumindest teilweise umgreift. In diesem Fall steht der Kragen 4 in axialer Richtung zum Schaft 3 vom Kopf 2 vor. Dies bewirkt, dass der Dichtring 5 an seiner Peripherie stärker gegen das Bauteil gedrückt wird als im radial innen liegenden Bereich.

In der in der Figur dargestellten Ausführungsvariante weist der Kopf 2 eine äußere Angriffskontur 7 zur Aufnahme eines Drehmoments auf den Kopf 2 ausübenden, insbesondere ein Drehmoment erzeugenden Werkzeugs auf. Diese ist hier beispielhaft in Gestalt eines 8-Ecks ausgeführt, so dass ein Maulschlüssel, Ringmaulschlüssel, Steckschlüssel oder eine Zange an den Kopf 2 angesetzt werden kann, um ein Drehmoment auf das Befestigungselement 1 zu übertragen. Gemäß einer nicht dargestellten Ausführungsvariante kann der Kopf 2 eine innere Angriffskontur in Gestalt einer Vertiefung aufweisen, um formschlüssig ein Drehmoment übertragendes Werkzeug, beispielsweise die Spitze eines Schraubendrehers aufzunehmen. Hier können die dem Fachmann hinlänglich bekannten Konturen für die Vertiefung bzw. die innere Angriffskontur Verwendung finden, wie sie bei Bits oder Torx zu finden sind.

Das Gewinde 6 ist selbstschneidend ausgeführt. Hierzu besitzt es einen spitzen Flankenwinkel y, der vorzugsweise zwischen 50° und 55°, insbesondere etwa 51° beträgt. Die Flanken 13 laufen spitz aufeinander zu, so dass die Umfangskante 14 des Gewindes 4 eine Schneide bildet, die in das Bauteil bei zu kleinem Loch einschneiden kann.

Das Gewinde 6 ist als eingängiges Gewinde 6 ausgebildet. Dies genügt, da es keine großen axialen Kräfte aufnehmen bzw. übertragen muss. Gleichwohl kann in einer nicht dargestellten Ausführungsvariante auch ein zweigängiges Gewinde 6 bei dem Befestigungselement 1 vorhanden sein.

Die Ganghöhe B1 des Gewindes 6 liegt geeigneterweise im Bereich von -20% bis + 20% des halben Gewindeaußendurchmessers vorzugsweise im Bereich von -10% bis + 10% des halben Gewindeaußendurchmessers. Hierdurch wird erreicht, dass ein schneckenförmiges Gewinde mit einer vergleichsweise großen Steigung vorliegt. Dies bewirkt, dass das Befestigungselement 1 mit wenigen Umdrehungen bereits vollständig in die Dämmstoffplatte eingeschraubt ist. Gemäß einem bevorzugten Ausführungsbeispiel beträgt die Ganghöhe B1 zwischen 5 mm und 7 mm, besonders bevorzugt etwa 6mm. Die Ganghöhe B1 entspricht der Steigung des Gewindes 6, d.h. dem Abstand zwischen einem Anfangspunkt auf der Außenkante eines Gewindegangs 8 zu einem Endpunkt auf der Außenkante 14 des Gewindegangs 8, wenn der Anfangspunkt um einen Umfangswinkel von 360° auf dem Umfang der Außenkante 14 wandert.

Erfindungsgemäß ist das Verhältnis von Außendurchmesser des Gewindes zum Kerndurchmesser des Schafts mindestens 1,8. Um einen möglichst guten Halt des Befestigungselements 1 in der Dämmstoffplatte zu erreichen, sollte der Außendurchmesser des Gewindes jedoch so groß wie möglich sein. Besonders bevorzugt beträgt deshalb das Verhältnis von Außendurchmesser D1ₘₐₓ, D1ₘᵢₙ des Gewindes 6 zum Kerndurchmesser D2 des Schafts 3 mindestens 2,0 idealerweise mindestens 2,4. Folglich ist der Gewindeaußendurchmesser (D1ₘₐₓ, D1ₘᵢₙ) dann mindestens so groß wie der doppelte Kerndurchmesser D2 des Schafts 3.

Die radiale Gewindehöhe Hmax, Hmin ergibt sich aus der Differenz des Außendurchmessers D1ₘₐₓ, D1ₘᵢₙ des Gewindes 6 und dem Kerndurchmesser D2 des Schafts 3. Somit bedeutet das genannte Verhältnis von Gewindeaußendurchmesser D1max, D1min zu Kerndurchmesser D2 mit anderen Worten, dass die radiale Gewindehöhe Hmax, Hmin gleich oder größer dem halben Kerndurchmesser D2 des Schaftes 3 ist.

Beispielsweise beträgt der Außendurchmesser D1ₘₐₓ, D1ₘᵢₙ des Gewindes 6 zwischen 10 mm und 15 mm, insbesondere maximal zwischen 13 mm und 14 mm. Der Kerndurchmesser D2 des Schafts 3 beträgt beispielsweise zwischen 5 mm und 6 mm. Wird bei einer bevorzugten Variante beispielsweise ein maximaler Außendurchmesser D1max von 13,3 mm in Verbindung mit einem Kerndurchmesser von 5,5 mm gewählt, so ergibt sich, dass der Abstand von einem Punkt auf der Außenkante 14 des Gewindes 6 zu einem diesem radial gegenüberliegenden Punkt auf dem Umfang des Schafts 3 bei 9,4 mm liegt, d.h. kleiner als 10mm ist. Dies ist von besonderer Bedeutung für zu befestigende Bauteile, die aus einem Material bestehen, beispielsweise Stahlblech, das härter als das erfindungsgemäße Befestigungselement 1 ist. Ein solches Bauteil kann beispielsweise herstellerseitig mit einem 10 mm Loch versehen sein und das Befestigungselement 1 kann trotz des größeren Gewindeaußendurchmessers in dieses Loch eingesetzt, insbesondere eingedreht werden, ohne dass das Loch aufgebohrt werden muss. Dies wird gerade durch die geeignete Wahl des maximalen Gewindeaußendurchmessers D1max einerseits und des Kerndurchmessers D2 des Schafts 3 andererseits gewährleistet.

Für ein 10mm Loch im Bauteil liegt die Grenze zur Einsetzbarkeit des Gewindes 6 bei einem Gewindeaußendurchmesser D1max von 14mm und gleichzeitigem Kerndurchmesser D2 von 6 mm. Denn in diesem Fall entspricht der genannte Abstand von dem einen Punkt zum anderen Punkt gerade dem Lochdurchmesser 10mm. Daher sollte in diesem Fall entweder der Gewindeaußendurchmesser D1max kleiner als 14mm oder der Kerndurchmesser D2 kleiner als 6mm sein.

Denn in diesem Fall gleitet der radial innere Rand des Lochs in dem Bauteil beim Einschrauben des Befestigungselements 1 zwischen zwei Gewindegängen 8 vom bohrerkopfseitigen Ende des Schaftes 3 zum kopfseitigen Ende des Schaftes 8.

Aus diesem Grunde ist bei dem Befestigungselement 1 die maximale radiale Gewindehöhe (Hmax) des Gewindes 6 gemäß einer bevorzugten Ausführungsvariante gerade so bemessen, dass die Summe aus dem Kerndurchmesser D2 des Schafts 3 und dieser maximalen Gewindehöhe Hmax kleiner als der Durchmesser des Lochs ist, das bestimmungsgemäß das Befestigungselement 1 aufnimmt.

Durch die Ganghöhe B1, den Außendurchmesser D1max, D1min des Gewindes 6, den Flankenwinkel γ und den Kerndurchmesser D2 des Schafts 3 ist das Gewinde 6 vollständig beschreibbar. Die Gewindegänge 8 erheben sich radial vom Schaftumfang mit dreieckigem Querschnitt, so dass zwischen zwei benachbarten Gewindegängen 8 ein Gewindegrund 9 liegt. Dieser kann beispielsweise eine axiale Breite B2 aufweisen, die das 1,5 bis 2,5-fache der Breite der Gewindegänge 8 an ihrem schaftseitigen Fuß beträgt. Dies gewährleistet, dass ausreichend Platz zwischen benachbarten Gewindegängen 8 besteht, um das zu befestigende Bauteil zwischen diesen zu führen, ohne das Loch einschneiden.

Die Länge des Befestigungselements ist abhängig von der Dicke der Dämmstoffplatte respektive der Dicke des gesamten die Dämmstoffplatte umfassenden Wärmedämmverbundsystems, denn es sollen Wärmebrücken zwischen Befestigungselement und Mauerwerk vermieden werden. Für die Wärmedämmung von Gebäuden werden Dämmstoffplatten unterschiedlicher Dicke verwendet, so dass auch unterschiedliche Längen des Befestigungselements sinnvoll sind. Bevorzugt beträgt die Länge L des Befestigungselements 1 zwischen 60mm und 120mm.

Von der Länge L des Befestigungselements 1 ist es abhängig, wie viele Gewindegänge 8 der Schaft 3 entlang seiner axialen Länge besitzt. Die Anzahl an Gewindegängen 8 bestimmt wiederum bei fester Länge L die Ganghöhe B1 des Gewindes. Vorzugweise weist das Gewinde 6 mindestens sieben volle Gewindegänge 8 und weniger als neuneinhalb Gewindegänge 8 auf.

Von besonderem Vorteil ist es, wenn das Gewinde 6 zum Kopf 2 hin ausläuft, insbesondere entlang zumindest einer Dreiviertel-Umdrehung. Mit anderen Worten nimmt die radiale Gewindehöhe des kopfseitig letzten Gewindegangs 8 des Gewindes 6 zum Kopf hin allmählich ab. Dies hat den Vorteil, dass das Befestigungselement, im vollständig angezogenen Zustand nicht mit seinem Gewinde 6 im Loch festsitzt, d.h. keinen Presssitz hat. Denn dies hätte zum Nachteil, dass sich das Bauteil infolge thermisch bedingter Ausdehnung verformt und starke Kräfte auf das Befestigungselement 1 übertragen werden, was wiederum zu einer Lockerung des Befestigungsmittels 1 in dem Wärmedämmverbundsystem führen kann. So wird das Befestigungselement 1 zumindest bei der letzten Umdrehung aus dem Loch im zu befestigenden Bauteil entformt. Hierdurch wird eine Relativbewegung zwischen Befestigungselement und Bauteil ermöglicht.

Vorzugsweise endet das Auslaufende des Gewindes 6 in einem Abstand von 1-5 mm vor dem Kopf 2, insbesondere vor der Dichtscheibe 4. Alternativ kann der Abstand zumindest der Breite des Gewindegrundes 9 entsprechen. Dies gewährleistet auch bei dickeren zu befestigenden Bauteilen, dass diese bei angezogenem Befestigungselement 1 nicht mehr in kraftschlüssigem Kontakt stehen.

Alternativ oder zusätzlich zu dem kopfseitig auslaufenden Gewinde 6, kann das Gewinde 6 zum Bohrerkopf 10 hin auslaufen, insbesondere entlang zumindest einer vollen Umdrehung. Mit anderen Worten nimmt die radiale Gewindehöhe des bohrerkopfseitigen, ersten Gewindegangs 8 des Gewindes 6 zum Bohrerkopf hin allmählich ab. Dies erleichtert das Eindrehen des Befestigungselements 1. Somit schneidet das Gewinde 6 nicht bereits bei seinem ersten Gewindegang 8 mit der vollen radialen Tiefe in den Putz und gegebenenfalls das Bauteil ein, was mit einem hohen Drehmomentaufwand verbunden wäre. Durch das allmähliche Einschneiden mit zunehmendem Umdrehungswinkel ist das aufzuwendende Drehmoment zu Beginn niedriger als wenn das Gewinde 6 sogleich seine volle Gewindehöhe hätte.

Bei einer selbstschneidenden Schraube ist das Drehmoment zu Beginn ihres Eindrehens am höchsten, weil mit zunehmender Drehung das Einschneiden durch das Gewinde zunehmend erfolgt. Hat das Gewinde seine maximale Eintauchtiefe erreicht, ist das aufzuwendende Drehmoment erheblich geringer, weil im Wesentlichen nur noch die Reibverluste überwunden werden müssen.

Es ist deshalb von Vorteil, wenn sich das Gewinde 6 zum Bohrerkopf 10 hin konisch verjüngt. Dies bedeutet, dass die radiale Gewindehöhe von Gewindegang 8 zu Gewindegang 8 abnimmt. Hierdurch wird erreicht, dass auch bei fortschreitendem Eindrehen des Befestigungselements 1 ein zunehmendes Einschneiden durch das Gewinde 6 in den Putz und die Dämmstoffplatte, gegebenenfalls auch in das Bauteil erfolgt. Insoweit wird das aufzuwendende Drehmoment auf den gesamten Eindrehprozess verteilt und das maximale Drehmoment, das zu Beginn aufzuwenden ist, wird reduziert. Dies erleichtert das Setzen des Befestigungselements 1. Die Konizität des Gewindes kann beispielsweise derart sein, dass es sich mit einem Verjüngungswinkel α zwischen 1,5° und 3° verjüngt.

Bei dem in der Figur gezeigten Ausführungsbeispiel beträgt der Verjüngungswinkel α etwa 1,6°. Die Konizität des Gewindes 6 führt dazu, dass der Außendurchmesser des Gewindes 6 vom Kopf 2 zum Bohrkopf 10 abnimmt, d.h. am kopfseitigen Ende größer ist als am bohrerkopfseitigen Ende des Schafts 3. Bei dem in der Figur gezeigten Ausführungsbeispiel ist der Außendurchmesser des Gewindes 6 kopfseitig des Schaftes 3 bevor das Gewinde 6 ausläuft etwa 13,3 mm. Demgegenüber beträgt der Außendurchmesser des ersten richtige Gewindegangs 8 auf dem bohrerkopfseitigen Ende des Schafts 3, bevor das Gewinde zum Bohrerkopf 10 ausläuft, etwa 11,3 mm. Somit steigt der Außendurchmesser des Gewindes 6 entlang seiner axialen Erstreckung um 2 mm an. Aus diesem Grunde gibt es bei der in der Figur gezeigten, besonderen Ausführungsvariante zwei Außendurchmesser, nämlich einen minimalen Außendurchmesser und einen maximalen Außendurchmesser des Gewindes 6. Soweit in der vorherigen Erfindungsbeschreibung nicht zwischen diesen beiden Außendurchmessern differenziert wird, ist unter dem Außendurchmesser stets der maximale Außendurchmesser, d.h. der größere der beiden Außendurchmesser zu verstehen.

Erfindungsgemäß steht der Bohrerkopf 10 gegenüber dem Schaft 3 radial vor. Dies gewährleistet, dass der Schaft 3 niemals mit Presssitz oder zumindest formschlüssig in einem Loch des zu befestigenden Bauteils einliegt. Vielmehr bohrt der Bohrerkopf 10 ein Loch oder erweitert ein bestehendes Loch im Falle eines Untermaßes soweit, dass ein Spiel zwischen dem Lochrand und dem Schaft besteht. Somit müssen keine Reibkräfte überwunden werden. Darüber hinaus wird durch den vorstehenden Bohrerkopf 10 sichergestellt, dass das Gewinde 6 überhaupt in dem im zu befestigenden Bauteil vorhandenen oder darin zu erzeugenden Loch bzw. im Putz greifen kann. Denn das bohrerkopfseitige Auslaufende des Gewindes 6 bleibt in radialer Richtung hinter dem radial vorstehenden Bohrerkopf 10 zurück. Ist das Bauteil beispielsweise ein Blech, so kann das Befestigungselement vor einem drehend einschneidenden Eingriff des Gewindes in axialer Richtung zumindest so weit in das Loch eingesetzt werden, dass das Gewinde 6 mit seinem zum Bohrerkopf 10 auslaufenden Anfangsgewindegang entlang der gesamten Dicke des Bauteils innenseitig des Lochs anliegt. Dies erleichtert das Einschneiden in das Bauteil.

Ein weiterer Vorteil des radial vorstehenden Bohrerkopfes 10 liegt in der Überwindung eines herstellungsbedingten Nachteils. Wird das erfindungsgemäße Befestigungselement 1 in einem Spritzgussprozess hergestellt, d.h. unter Verwendung zweier formgebender Werkzeughälften, zwischen denen eine das Befestigungselement in Form und Größe definierende Kavität gebildet ist, die von der Metallschmelze ausgefüllt wird, so erhält das Gewinde dort, wo die Werkzeughälften aneinander liegen, eine Unstetigkeit in Gestalt einer Kante, die beim Eindrehen stört. Geschickterweise können die beiden Werkzeughälften deshalb gerade so ausgebildet sein, dass die Unstetigkeit am bohrerkopfseitigen Auslaufende liegt, d.h. dort, wo der Außendurchmesser des allmählich steigenden Gewindegangs 8 noch kleiner ist als der Außendurchmesser des Bohrerkopfes 10. Die Unstetigkeit stellt dann beim Eindrehen des Befestigungselements 1 kein Hindernis dar.

Obgleich der Bohrerkopf 10 radial gegenüber dem Schaft 3 vorsteht, ist sein Außendurchmesser natürlich kleiner als der (minimale und maximale) Außendurchmesser D1min, D1max des Gewindes 6, weil anderenfalls das Befestigungselement weder im Putz noch in der Dämmstoffplatte halt finden würde. Erfindungsgemäß ist der Bohrerkopf 10 zwei- oder mehr schneidig. Bei dem in der Figur gezeigten Ausführungsbeispiel besitzt der Bohrerkopf 10 zwei diametral gegenüberliegende Schneiden 11. Es handelt sich bei einem solchen Bohrkopf nicht lediglich um eine Bohrspitze, wie sie herkömmliche Blech- oder auch Holzschrauben aufweisen. Der Bohrerkopf 10 ist vielmehr gewindelos ausgeführt und hat aufgrund der Schneiden eine spanabhebende Wirkung beim Drehen in Metall oder Kunststoff. Aus diesem Grunde ist das erfindungsgemäße Befestigungselement besonders gut geeignet, bei fehlenden Löchern in dem zu befestigenden Bauteil ein Loch zu erzeugen und ferner auch ein Loch in den Putz zu bohren ohne durch zu drehen oder stumpf zu werden.

Idealerweise ist die Schneide oder sind die Schneiden 14 kegelförmig, d.h. zur Rotationsachse zulaufend, wie dies beispielsweise bei einem Kegelsenker bekannt ist. Somit ist der Bohrerkopf 10 selbst kegelförmig. Vorzugsweise weisen die Schneide oder Schneiden 14 einen Kegelwinkel von mehr als 100°. Durch die Kegelform ist eine Selbstzentrierung bei aufzuweitenden Löchern gewährleistet und das Ansetzen des Bohrerkopfes 10 besonders einfach und sicher.

Für den Fall, dass in dem zu befestigenden Bauteil keine aufzuweitenden Löcher vorhanden sind, ist es hilfreich, wenn der Bohrerkopf 10 einen von seiner axialen Mitte vorstehenden, spitzen Zapfen aufweist, der ein ortsfestes Ansetzen gewährleistet und ein zielloses Wandern beim Drehen des Befestigungselements nach dem Ansetzen verhindert. Dieser Zapfen wirkt wie ein Körner und stellt beim Ansetzen des Befestigungselements am Bauteil eine kleine Vertiefung her, die sogleich zur Zentrierung des Bohrvorgangs genutzt wird.

Gemäß einer anderen vorteilhaften Weiterbildung des erfindungsgemäßen Befestigungselements 1, weist der Übergang vom Bohrerkopf 10 zum Schaft 3 eine Hohlkehle 12 oder eine Innenfase auf. In dem in der Figur gezeigten Ausführungsbeispiel ist eine Hohlkehle 12 vorhanden. Der genannte Übergang stellt eine Sollbruchstelle im Falle großer Drehmomente dar, die beispielsweise dann auftreten, wenn sich das Befestigungselement 1 in dem Bauteil festbeißt. Durch die Hohlkehle 12 oder Innenfase wird kein unstetiger, sondern ein kontinuierlicher Übergang vom Schaftende zum Bohrerkopf 10 erreicht, und die Fläche, mit der das Schaftende am Bohrkopf anschließt wird vergrößert. Hierdurch wird eine höhere mechanische Stabilität des Befestigungselements erreicht.

Es sei darauf hingewiesen, dass das erfindungsgemäße Befestigungselement 1 nicht auf die in der Figur gezeigte Ausführungsvariante beschränkt ist. Vielmehr können auch davon abgewandelte Varianten den Erfindungsgedanken tragen. Ferner sei darauf hingewiesen, dass die vorbeschriebenen bevorzugten oder vorteilhaften Ausführungsvarianten oder Weiterbildungen sowohl in Kombination als auch alternativ bei dem Befestigungselement 1 realisiert sein können.

### Bezugszeichenliste

- 1: Befestigungselement
- 2: Kopf
- 3: Schaft
- 4: Kragen
- 5: Dichtring
- 6: Gewinde
- 7: Angriffskontur
- 8: Gewindegang
- 9: Gewindegrund
- 10: Bohrerkopf
- 11: Schneide
- 12: Hohlkehle
- 13: Gewindeflanke
- 14: Außenkante

## Patentansprüche

1. Befestigungselement (1) zur Befestigung eines Bauteils, insbesondere aus Blech, an einer einem Mauerwerk vorgelagerten Dämmstoffplatte, die eine äußere Putzschicht aufweist, mit einem Kopf (2) und einem Schaft (3), wobei der Kopf (2) eine Angriffskontur (7) zur Aufnahme eines Drehmoment ausübenden Mittels und der Schaft (3) ein selbstschneidendes Gewinde (6) aufweist, das sich schneckenförmig entlang zumindest eines Teils des Schaftumfangs zum Kopf (2) erstreckt, wobei das Verhältnis von Außendurchmesser (D1ₘₐₓ, D1ₘᵢₙ) des Gewindes (6) zum Kerndurchmesser (D2) des Schafts (3) mindestens 1,8 beträgt und das dem Kopf (2) gegenüberliegende Ende des Schafts (3) einen zwei oder mehrschneidigen Bohrerkopf (10) trägt, der gegenüber dem Schaft (3) radial vorsteht, wobei der Kopf, Schaft (3), dessen Gewinde (6) und der Bohrerkopf (10) einstückig hergestellt sind,
**dadurch gekennzeichnet, dass** der Kopf, Schaft (3), dessen Gewinde (6) und der Bohrerkopf (10) aus einer Zink-Aluminium-Kupfer Legierung hergestellt sind und kopfseitig auf dem Schaft (3) ein Dichtring (5) zur Abdichtung eines das Befestigungselement (1) aufnehmenden Loches in dem Bauteil angeordnet ist.

2. Befestigungselement (1) nach Anspruch 1, **dadurch gekennzeichnet, dass** es in einem Druckgussverfahren hergestellt ist.

3. Befestigungselement (1) nach Anspruch 1 oder 2, **dadurch gekennzeichnet, dass** die Ganghöhe (B1) des Gewindes (6) im Bereich von -20% bis + 20% des halben Außendurchmesser (D1ₘₐₓ, D1ₘᵢₙ) des Gewindes (6) vorzugsweise im Bereich von -10% bis + 10% des Außendurchmesser (D1ₘₐₓ, D1ₘᵢₙ) des Gewindes (6) liegt.

4. Befestigungselement (1) nach einem der vorherigen Ansprüche, **dadurch gekennzeichnet, dass** das Verhältnis von Außendurchmesser (D1ₘₐₓ, D1ₘᵢₙ) des Gewindes (6) zum Kerndurchmesser (D2) des Schafts (3) mindestens 2,0 vorzugsweise mindestens 2,4 beträgt.

5. Befestigungselement (1) nach einem der vorherigen Ansprüche, **dadurch gekennzeichnet, dass** das Gewinde (6) zum Kopf (2) hin und/ oder zum Bohrerkopf (10) hin ausläuft, insbesondere entlang zumindest einer Dreiviertel-Umdrehung.

6. Befestigungselement (1) nach einem der vorherigen Ansprüche, **dadurch gekennzeichnet, dass** sich das Gewinde (6) zum Bohrerkopf (10) hin konisch verjüngt, insbesondere um einen Verjüngungswinkel (α) zwischen 1,5° und 3°.

7. Befestigungselement (1) nach einem der vorherigen Ansprüche, **dadurch gekennzeichnet, dass** der Bohrerkopf (10) mit seinen Schneiden (11) kegelförmig ist.

8. Befestigungselement (1) nach einem der vorherigen Ansprüche, **dadurch gekennzeichnet, dass** der Bohrerkopf (10) einen von seiner axialen Mitte vorstehenden spitzen Zapfen zur Zentrierung des Befestigungselements (1) beim Bohren aufweist.

9. Befestigungselement (1) nach einem der vorherigen Ansprüche, **dadurch gekennzeichnet, dass** der Übergang von dem Bohrerkopf (10) zum Schaft (3) eine Hohlkehle (12) oder Innenfase aufweist.

10. Befestigungselement (1) nach einem der vorherigen Ansprüche, **dadurch gekennzeichnet, dass** der Kopf (2) an seinem schaftseitigen Axialende einen radial vorstehenden Kragen (4) aufweist, an dem der Dichtring (5) anliegt.

11. Befestigungselement (1) nach einem der vorherigen Ansprüche, **dadurch gekennzeichnet, dass** der Gewindeaußendurchmesser (D1max, D1min) des Gewindes (6) zwischen 10 mm und 15 mm, insbesondere maximal zwischen 13 mm und 14 mm beträgt.

12. Befestigungselement (1) nach einem der vorherigen Ansprüche, **dadurch gekennzeichnet, dass** der Kerndurchmesser (D2) des Schafts (3) zwischen 5 mm und 6 mm beträgt.

13. Befestigungselement (1) nach einem der vorherigen Ansprüche, **dadurch gekennzeichnet, dass** die Ganghöhe (B1) des Gewindes (6) zwischen 5 mm und 7 mm pro Umfang beträgt.

## Claims

1. Fastening device (1) for fastening a component, in particular of sheet metal, to an insulating panel mounted in front of a masonry structure and having an outer plaster layer, comprising a head (2) and a shank (3), wherein the head (2) has an engagement contour (7) for receiving a torque exerting means and the shaft (3) has a self-tapping thread (6), which extends helically along at least part of the shaft circumference to the head (2), wherein the ratio of the outer diameter (D1ₘₐₓ, D1ₘᵢₙ) of the thread (6) to the core diameter (D2) of the shank (3) is at least 1.8 and the end of the shank (3) opposite the head (2) carries a two- or multi-bladed drill head (10) which projects radially with respect to the shank (3), wherein the head, shank (3), its thread (6) and the drill head (10) are manufactured in one piece,
**characterised in that** the head, shank (3), its thread (6) and the drill head (10) are manufactured from a zinc-aluminium-copper alloy and a sealing ring (5) is arranged on the head end of the shank (3) for sealing a hole in the component that receives the fastening device (1).

2. Fastening device (1) according to claim 1, **characterised in that** is manufactured in a die-casting process.

3. Fastening device (1) according to claim 1 or 2, **characterised in that** the pitch (B1) of the thread (6) is in the range of -20% to +20% of half the outer diameter (D1ₘₐₓ, D1ₘᵢₙ) of the thread (6), preferably in the range of -10% to +10% of the outer diameter (D1ₘₐₓ, D1ₘᵢₙ) of the thread (6).

4. Fastening device (1) according to any one of the preceding claims, **characterised in that** the ratio of outer diameter (D1ₘₐₓ, D1ₘᵢₙ) of the thread (6) to the core diameter (D2) of the shank (3) is at least 2.0, preferably at least 2.4.

5. Fastening device (1) according to any one of the preceding claims, **characterised in that** the thread (6) diminishes towards the head (2) and/or towards the drill head (10), in particular along at least three quarters of a turn.

6. Fastening device (1) according to any one of the preceding claims, **characterised in that** the thread (6) tapers conically towards the drill head (10), in particular at a taper angle (α) of between 1.5° and 3°.

7. Fastening device (1) according to any one of the preceding claims, **characterised in that** the drill head (10) with its cutting edges (11) is conical.

8. Fastening device (1) according to any one of the preceding claims, **characterised in that** the drill head (10) has a pointed pin projecting from its axial centre for centring the fastening device (1) during drilling.

9. Fastening device (1) according to any one of the preceding claims, **characterised in that** the transition from the drill head (10) to the shank (3) has a fillet (12) or internal chamfer.

10. Fastening device (1) according to any one of the preceding claims, **characterised in that,** at the shaft side of its axial end, the head (2) has a radially projecting collar (4) against which the sealing ring (5) rests.

11. Fastening device (1) according to any one of the preceding claims, **characterised in that** the thread outer diameter (D1ₘₐₓ, D1ₘᵢₙ) of the thread (6) is between 10 mm and 15 mm, in particular at most between 13 mm and 14 mm.

12. Fastening device (1) according to any one of the preceding claims, **characterised in that** the core diameter (D2) of the shank (3) is between 5 mm and 6 mm.

13. Fastening device (1) according to any one of the preceding claims, **characterised in that** the pitch (B1) of the thread (6) is between 5 mm and 7 mm per circumference.

## Revendications

1. Elément de fixation (1) pour la fixation d'un composant, en particulier en tôle, à une plaque isolante logée en amont d'une œuvre de maçonnerie qui présente une couche d'enduit extérieure, avec une tête (2) et une tige (3), dans lequel la tête (2) présente un contour d'attaque (7) pour la réception d'un moyen exerçant un couple et la tige (3) présente un filet (6) autotaraudant qui s'étend en forme d'hélice le long au moins d'une partie de la périphérie de tige vers la tête (2), dans lequel le rapport entre le diamètre extérieur (D1ₘₐₓ, D1ₘᵢₙ) du filet (6) et le diamètre central (D2) de la tige (3) s'élève au moins à 1,8 et l'extrémité opposée à la tête (2) de la tige (3) porte une tête de foret (10) à deux ou plusieurs tranchants qui dépasse radialement par rapport à la tige (3), dans lequel la tête, la tige (3), son filet (6) et la tête de foret (10) sont fabriqués d'un seul tenant, **caractérisé en ce que** la tête, la tige (3), son filet (6) et la tête de foret (10) sont fabriqués en un alliage de zinc-aluminium-cuivre et côté tête sur la tige (3) un anneau étanche (5) est agencé pour rendre étanche un trou recevant l'élément de fixation (1) dans le composant.

2. Elément de fixation (1) selon la revendication 1, **caractérisé en ce qu'**il est fabriqué dans un procédé de coulée sous pression.

3. Elément de fixation (1) selon la revendication 1 ou 2, **caractérisé en ce que** la hauteur de pas (B1) du filet (6) se trouve dans la plage de -20 % à +20 % du demi-diamètre extérieur (D1ₘₐₓ, D1ₘᵢₙ) du filet (6) de préférence dans la plage de -10 % à +10 % du diamètre extérieur (D1ₘₐₓ, D1ₘᵢₙ) du filet (6).

4. Elément de fixation (1) selon l'une quelconque des revendications précédentes, **caractérisé en ce que** le rapport entre le diamètre extérieur (D1ₘₐₓ, D1ₘᵢₙ) du filet (6) et le diamètre central (D2) de la tige (3) s'élève au moins à 2,0 de préférence au moins à 2,4.

5. Elément de fixation (1) selon l'une quelconque des revendications précédentes, **caractérisé en ce que** le filet (6) se termine vers la tête (2) et/ou vers la tête de foret (10), en particulier le long d'au moins une rotation de trois-quarts.

6. Elément de fixation (1) selon l'une quelconque des revendications précédentes, **caractérisé en ce que** le filet (6) se rétrécit en cône vers la tête de foret (10), en particulier d'un angle de rétrécissement (a) entre 1,5° et 3°.

7. Elément de fixation (1) selon l'une quelconque des revendications précédentes, **caractérisé en ce que** la tête de foret (10) est en forme de cône avec ses tranchants (11).

8. Elément de fixation (1) selon l'une quelconque des revendications précédentes, **caractérisé en ce que** la tête de foret (10) présente un tenon pointu dépassant de son milieu axial pour le centrage de l'élément de fixation (1) lors du forage.

9. Elément de fixation (1) selon l'une quelconque des revendications précédentes, **caractérisé en ce que** la transition de la tête de foret (10) à la tige (3) présente une gorge creuse (12) ou un chanfrein intérieur.

10. Elément de fixation (1) selon l'une quelconque des revendications précédentes, **caractérisé en ce que** la tête (2) présente à son extrémité axiale côté tige un collet (4) dépassant radialement, contre lequel l'anneau étanche (5) repose.

11. Elément de fixation (1) selon l'une quelconque des revendications précédentes, **caractérisé en ce que** le diamètre extérieur de filet (D1ₘₐₓ, D1ₘᵢₙ) du filet (6) est compris entre 10 mm et 15 mm, en particulier au maximum entre 13 mm et 14 mm.

12. Elément de fixation (1) selon l'une quelconque des revendications précédentes, **caractérisé en ce que** le diamètre central (D2) de la tige (3) est compris entre 5 mm et 6 mm.

13. Elément de fixation (1) selon l'une quelconque des revendications précédentes, **caractérisé en ce que** la hauteur de pas (B1) du filet (6) est comprise entre 5 mm et 7 mm par périphérie.
